(19) Europäisches Patentamt
European Patent Office
Office européen des brevets

(11) **EP 3 971 047 B1**

(12) **EUROPEAN PATENT SPECIFICATION**

(45) Date of publication and mention
of the grant of the patent:
**04.10.2023 Bulletin 2023/40**

(21) Application number: **20930646.3**

(22) Date of filing: **16.10.2020**

(51) International Patent Classification (IPC):
**B60W 30/06** (2006.01)   **G01C 21/00** (2006.01)
**B62D 15/02** (2006.01)   **G05D 1/02** (2020.01)
**G01C 21/34** (2006.01)   **G01C 21/36** (2006.01)

(52) Cooperative Patent Classification (CPC):
**B62D 15/0285; G01C 21/3446; G01C 21/3685**

(86) International application number:
**PCT/CN2020/121566**

(87) International publication number:
**WO 2022/007227 (13.01.2022 Gazette 2022/02)**

(54) **AUTOMATIC PARKING METHOD AND VEHICLE**

VERFAHREN ZUM AUTOMATISCHEN EINPARKEN UND FAHRZEUG

PROCÉDÉ DE STATIONNEMENT AUTOMATIQUE ET VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.07.2020 CN 202010664638**

(43) Date of publication of application:
**23.03.2022 Bulletin 2022/12**

(73) Proprietor: **Guangdong Xiaopeng Motors
Technology Co., Ltd.
Sino-Singapore Knowledge City, Huangpu
District
Guangzhou, Guangdong 510555 (CN)**

(72) Inventors:
• **XU, Yang**
**Guangdong 510555 (CN)**
• **SU, Jingren**
**Guangdong 510555 (CN)**
• **XU, Kuangzheng**
**Guangdong 510555 (CN)**
• **LAI, Jianming**
**Guangdong 510555 (CN)**
• **CHEN, Shengjun**
**Guangdong 510555 (CN)**

(74) Representative: **Ran, Handong
Maucher Jenkins
Seventh Floor Offices
Artillery House
11-19 Artillery Row
London SW1P 1RT (GB)**

(56) References cited:
**EP-A1- 3 568 334        EP-B1- 3 568 334
CN-A- 109 733 384      CN-A- 110 139 794
CN-A- 110 703 768      CN-A- 111 307 152
US-A1- 2015 025 732   US-A1- 2017 168 485
US-A1- 2017 219 353   US-A1- 2020 001 862
US-B2- 10 365 110**

• **Klemm Sebastian; Oberlander Jan; Hermann
Andreas; Roennau Arne; Schamm Thomas;
Zollner J. Marius; Dillmann Rudiger:
"RRT✶-Connect: Faster, asymptotically
optimal motion planning", 2015 IEEE
International Conference on Robotics and
Biomimetics (ROBIO), IEEE, 6 December 2015
(2015-12-06), pages 1670-1677, XP032873296,
DOI: 10.1109/ROBIO.2015.7419012**
• **Zheng Kaiyu; Liu Shan: "RRT based Path
Planning for Autonomous Parking of Vehicle",
2018 IEEE 7th Data Driven Control and Learning
Systems Conference (DDCLS), IEEE, 25 May 2018
(2018-05-25), pages 627-632, XP033432461, DOI:
10.1109/DDCLS.2018.8515940**

**Description**

**FIELD**

The present disclosure relates to the field of parking technologies, and more particularly, to a method for automatic parking and a vehicle.

**BACKGROUND**

At present, most automatic parking adopts a route planning method based on geometry, and the method is mainly based on experience for setting and planning. However, when there are many obstacles in the parking scenario, the route planned with the planning method based on geometry cannot bypass the obstacles, which easily results in a failure of planning.

When adopting the route planning method based on geometry, a steering point of parking is usually required to be manually set in order to avoid the failure of planning. However, it is difficult for a novice driver accurately control the steering point of parking. Moreover, the route planning method based on geometry has poor general applicability, and it is only suitable for parking scenarios with wide parking spaces and aisles, failing to achieve an efficient route planning for other complex scenarios. EP3568334 A1 discloses a method and a system for an automated parking that determines, using the geometry of the vehicle and the map of the parking space, a collision free geometric path connecting an initial state of the vehicle with a target state of parked vehicle through a set of waypoints and determines, using a kinematic model of the vehicle, a set of kinematic subgraphs forming a kinematic graph having multiple nodes connected with kinematic edges.

**SUMMARY**

In view of the above problems, the present disclosure provides a method for automatic parking and a vehicle, capable of overcoming the above problems or at least partially solving the above problems.

A method for automatic parking includes: determining node distribution information for a to-be-parked area during the automatic parking, where the node distribution information includes a plurality of nodes through which a vehicle is capable of passing; determining an intermediate node based on the node distribution information, and obtaining a plurality of neighboring nodes by searching for neighboring nodes based on the intermediate node; determining cost information of candidate routes corresponding to the plurality of neighboring nodes respectively, where the candidate routes are each a route from a starting node to the intermediate node via a neighboring node; and determining a target neighboring node based on the cost information, and performing the automatic parking in accordance with the target neighboring node. The determining the cost information of candidate routes corresponding to the plurality of neighboring nodes respectively includes: determining, for one of the candidate routes corresponding to each of the plurality of neighboring nodes, route attribute information comprising a route length, an obstacle distance, and the number of times of steering of the vehicle; and determining the cost information based on the route attribute information.

Optionally, said performing the automatic parking in accordance with the target neighboring node includes: performing a rerouting by adopting the target neighboring node and the intermediate node to obtain a parking route, where the parking route includes a target route corresponding to the target neighboring node; and performing the automatic parking in accordance with the parking route.

Optionally, said determining the intermediate node based on the node distribution information includes: acquiring parking characteristic information; determining a sampling area based on the parking characteristic information and the node distribution information; and determining the intermediate node within the sampling area.

Optionally, said obtaining a plurality of neighboring nodes by searching for neighboring nodes based on the intermediate node includes: obtaining a plurality of candidate nodes by searching for the neighboring nodes based on the intermediate node; determining, from the plurality of candidate nodes, a node having no obstacle between the node and the intermediate node as a neighboring node.

Optionally, the method further includes: connecting any two nodes in the parking route by using a preset connection function, where the connection function corresponds to a plurality of connection modes.

Optionally, the parking characteristic information includes any one or more of a parking space type, a parking space width, and a relative relation between a starting pose of the vehicle and a target pose of the vehicle.

A vehicle includes: a node distribution determining module configured to determine node distribution information for a to-be-parked area during the automatic parking, where the node distribution information includes a plurality of nodes through which a vehicle is capable of passing; an intermediate node determining module configured to determine an intermediate node based on the node distribution information, and obtain a plurality of neighboring node by searching for neighboring nodes based on the intermediate node; a cost information determining module configured to determine cost information of candidate routes corresponding to the plurality of neighboring nodes respectively, where the candidate routes are each a route from a starting node to the intermediate node via a neighboring node; and a target neighboring node determining module configured to determine a target neighboring node based on the cost information, and perform the automatic parking in accordance with the target neighboring node. The cost information determining module includes: a route attribute information determining sub-module configured to determine, for one of the candidate routes corresponding to each of the plurality of neighboring nodes, route attribute information including a route length, an obstacle distance, and the number of times of steering of the vehicle; and a cost information determining sub-module configured to determine the cost information based on the route attribute information.

A vehicle includes a processor, a memory, and a computer program stored on the memory and executable on the processor. The computer program, when executed by the processor, performs the above-described method for automatic parking.

A computer-readable storage medium, having a computer program stored thereon. The computer program, when executed by a processor, performs the above-described method for automatic parking.

The embodiments of the present disclosure have the following advantages.

In the embodiments of the present disclosure, the node distribution information for the to-be-parked area is determined during the automatic parking, the intermediate node is determined based on the node distribution information, and the plurality of neighboring nodes is obtained by searching for the neighboring nodes based on the intermediate node, the cost information of candidate routes corresponding to the plurality of neighboring nodes is determined respectively, the target neighboring node is determined based on the cost information, and the automatic parking is performed in accordance with the target neighboring node. In this way, an automatic parking route can be optimized to be suitable for applying in complex parking scenarios, and thus can have the general applicability. A searching efficiency can be improved by searching for the neighboring nodes. In addition, compared with a method directly using the nearest neighboring node of the intermediate node as a parent node of the intermediate node, the embodiments of the present disclosure select the target neighboring node by adopting the cost information of the route from the starting node to the intermediate node via the neighboring node and thoroughly considers the cost of the overall route, thereby choosing the parking route for parking with the minimum cost.

## BRIEF DESCRIPTION OF DRAWINGS

In order to clearly explain technical solutions of the present disclosure, accompanying drawings used in the description of the present disclosure are briefly introduced below. Obviously, the accompanying drawings described below merely illustrate some embodiments of the present disclosure. Based on these drawings, other drawings can be obtained by those skilled in the art without paying creative efforts.

FIG. 1a is a schematic diagram of a perpendicular parking space sampling area according to an embodiment of the present disclosure;

FIG. 1b is a schematic diagram of a parallel parking space sampling area according to an embodiment of the present disclosure;

FIG. 2 is a flowchart of steps of a method for automatic parking according to an embodiment of the present disclosure;

FIG. 3a is a schematic diagram of determining a target neighboring node according to an embodiment of the present disclosure;

FIG. 3b is a schematic diagram after determining a target neighboring node according to an embodiment of the present disclosure;

FIG. 3c is a schematic diagram of a rerouting for neighboring nodes according to an embodiment of the present disclosure;

FIG. 3d is a schematic diagram after a rerouting for a neighboring node according to an embodiment of the present disclosure;

FIG. 4 is a flowchart of steps of another method for automatic parking according to an embodiment of the present disclosure;

FIG. 5 is a flowchart of a process for planning a route with the least cost according to an embodiment of the present disclosure; and

FIG. 6 is a schematic diagram of a vehicle according to an embodiment of the present disclosure.

## DESCRIPTION OF EMBODIMENTS

In order to facilitate the understanding of the above objects, features and advantages of the present disclosure, the present disclosure will be further described in detail below in conjunction with the accompanying drawings and specific embodiments. Obviously, the embodiments described herein are only part of, rather than all of the embodiments of the present disclosure. Based on the embodiments described in the present disclosure, other embodiments, which can be obtained by those skilled in the art without paying creative efforts, shall fall within scope of the present disclosure as defined by the appended claims.

The Rapidly Exploring Random Tree (RRT) algorithm is an incremental sampling search algorithm with advantages in that the final route is generated by connecting discrete nodes in a configuration space. The RRT algorithm tends to extend to open unexplored areas. When the time is long enough and the number of iterations is large enough, there is no area that cannot be explored.

As an improved algorithm of the RRT algorithm, the RRT star algorithm utilizes the idea of iterative deepening to optimize the planning results obtained by the RRT algorithm, and the important idea is to search for neighboring nodes and reroute.

In the embodiment of the present disclosure, the following improvements are made to the RRT star algorithm according to the parking scenario.

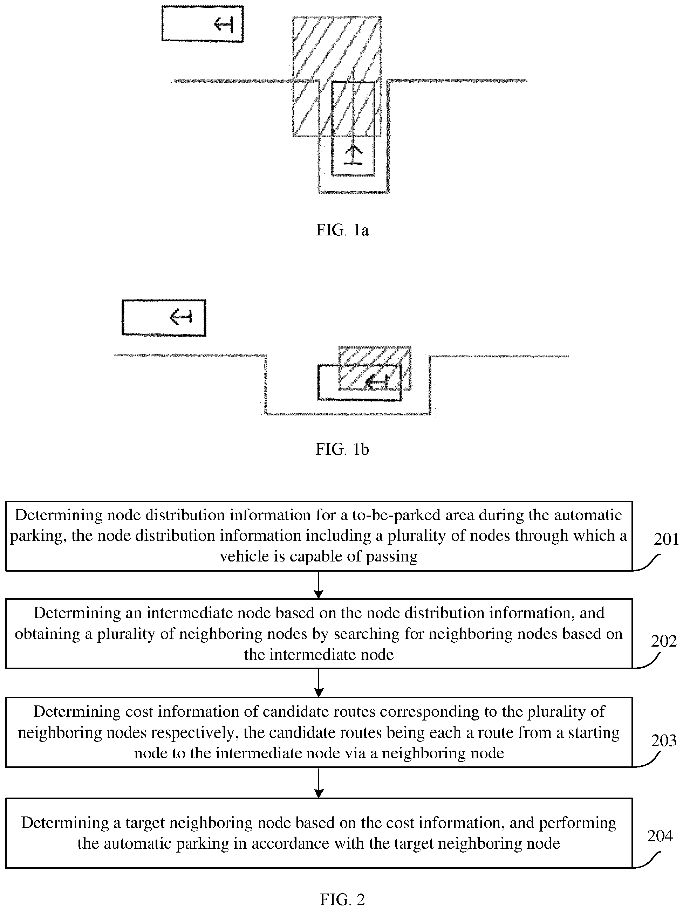

1) Selection of a sampling area: selecting the sampling area of the RRT in accordance with a size of a parking space, the type of the parking space (including a perpendicular parking space, a parallel parking space, and an oblique parking space), and locations of obstacles. For example, the shaded portion in FIG. 1a represents the sampling area of a perpendicular parking space; and the shaded portion in FIG. 1b is the sampling area of a parallel parking space.

2) Basic connection mode: for any point in the sample area (i.e., an intermediate node), a variety of routes may be constructed from a starting position to a destination position via the intermediate node of a vehicle. By using a Reeds-Sheep curve, a Dubins curve, a straight line-arc, and an arc-arc for connection, the diversity of a finally successfully planned route can be ensured.

3) Rout cost calculation during routing: in practical application, a straight-line distance (Euclidean distance) between two nodes can be used as the route cost between the two nodes. In an embodiment of the present disclosure, the route cost can be calculated in comprehensive consideration of a distance between a route and an obstacle, the number of the routes, a direction of the route, and a curvature of the route, thereby ensuring the safety of the planned route and reducing the number of times of shifting parking. For example, the route cost between two nodes can be calculated according to the following formula.

$$\text{Route cost} = a * \text{route length} - b * \text{obstacle distance coefficient} + c * \text{the number of times of turnings (Cost} = a * \text{Path\_Length} - b * \text{Distan\_Obs} + c * \text{Turns\_Num)}$$

where a, b and c are constants greater than 0.

As an example, the flow of the adopted planning algorithm is as follows.

Abscissa values (x), ordinate values (y), and steering angle parameters ($\theta$) of a starting pose, a target pose, as well as a plurality of obstacles together with frame segments of a parking space are input. For example, the starting pose may be represented by **startpos** ($x_s$, $y_s$, $\theta_s$), the target pose may be represented by **tarpos** ($x_g$, $y_g$, $\theta_g$), and the plurality of obstacles together with the frame segments of parking space may be represented by ($x_{11}$, $y_{11}$, $x_{12}$, $y_{12}$), ($x_{21}$, $y_{21}$, $x_{22}$, $y_{22}$),....... ($x_{n1}$, $y_{n1}$, $x_{n2}$, $y_{n2}$). In this case, after calculating all the input parameters, the output result is a collision-free route from the starting pose to the target pose. The obtained collision-free route may be a combination of straight lines and arcs.

The embodiments of the present disclosure will be described in detail below.

FIG. 2 is a flowchart of steps of a method for automatic parking according to an embodiment of the present disclosure. Referring to FIG. 2, the method may specifically include the following steps.

In step 201, node distribution information for a to-be-parked area is determined during the automatic parking, where the node distribution information includes a plurality of nodes through which a vehicle is capable of passing.

In practical applications, when the RRT calculation is used for training in a parking scenario, valid nodes obtained through each calculation can be recorded. These valid nodes are nodes through which the vehicle is capable of passing during a parking process, and all the valid nodes can constitute the node distribution information. Thus, the node distribution information for the to-be-parked area can be determined during the automatic parking.

Each node includes a pose (x, y, $\theta$) corresponding to the node, a cost of the node, an index of the node, an index of a parent node of the node, and route information from the parent node of the node to this node. The parent node of the node is a previous node of the node in the route from a starting node to this node.

By acquiring the node distribution information, the valid nodes are processed without screening invalid nodes. In this way, a planning time can be saved, and a searching efficiency is improved.

In step 202, an intermediate node is determined based on the node distribution information, and a plurality of neighboring nodes are obtained by searching for neighboring nodes based on the intermediate node.

After the node distribution information is determined, the intermediate node may be determined based on the node distribution information. The intermediate node is a node through which the vehicle passes in the process of moving from the starting position to the target position. The intermediate node is determined based on the obtained node distribution information, thereby avoiding the problem of inaccurate judgment of the steering point caused by manually setting the steering point.

In an example, multiple intermediate nodes may be determined at one time, and then a route planning is performed for each determined intermediate node to obtain one or more planning results. Alternatively, one intermediate node may be determined at one time; by setting iteration loop, the intermediate node may be determined in each iteration loop in a preset number of iterations, and the planning is performed for each determined intermediate node to obtain one or more planning results.

After the intermediate node is selected, a preset searching range can be determined based on the intermediate node. The plurality of neighboring nodes is obtained by searching for neighboring nodes based on the intermediate node. By searching for the neighboring nodes within the preset range, a blind search is avoided, which is conducive to improving the searching efficiency.

For example, the preset range may be set as a circle with radius R, where R may be calculated according to the following formula:

$$R = \text{connect\_circle\_dist} * \sqrt{\log n_{node}/n_{node}},$$

where R represents a radius of a circle of a preset searching range when searching for neighboring nodes by taking the intermediate node as the center of the circle; and $n_{node}$ represents the number of the existing nodes.

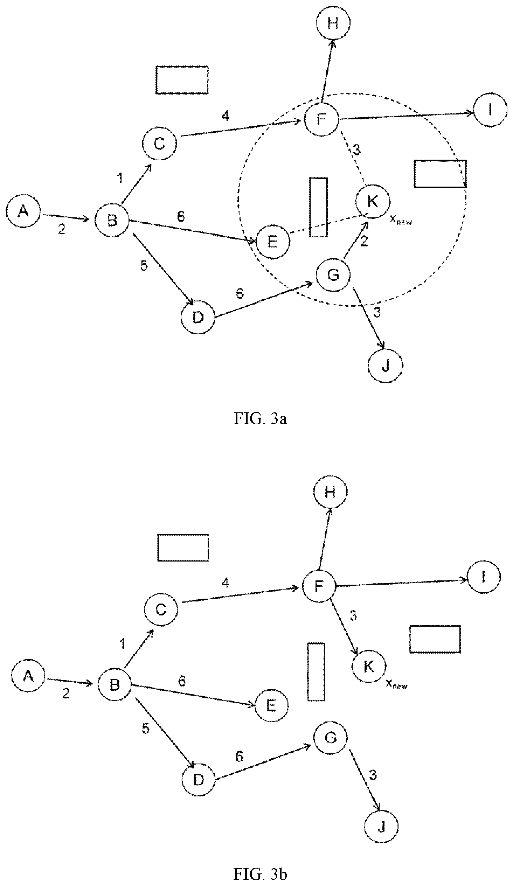

For example, as illustrated in FIG. 3a, **A** to **K** represent the valid nodes distributed in the to-be-parked area, the number above a connecting line between nodes represents route cost information between the two nodes, the node **K** is determined as the intermediate node, **Xnew** indicates that the K node is a new node. Within the circle with radius R, neighboring nodes of the node **K** are searched for, and the nodes **F** and **G** are determined as the neighboring nodes.

In step 203, cost information of candidate routes corresponding to the plurality of neighboring nodes is determined respectively, where the candidate routes are each a route from a starting node to the intermediate node via a neighboring node.

After the plurality of neighboring nodes of the intermediate node is determined, for each neighboring node, a corresponding candidate route can be determined from the starting node to the intermediate node via the neighboring node, and then the cost information of each candidate route can be calculated.

For example, as illustrated in FIG. 3a, the intermediate node **K** has the neighboring nodes **G** and **F** within the range R. For the node **G,** a candidate route from the starting node A to the intermediate node **K** via the node **G is A-B-D-G-K,** and through calculation, the route cost is 2+5+6+2=15. For the node F, a candidate route from the node **A** to the node **K** via the node **F** is **A-B-C-F-K,** and through calculation, the route cost is 2+1+4+3=10.

In an embodiment of the present disclosure, said determining the cost information of candidate routes corresponding to the plurality of neighboring nodes respectively may include the following sub-steps.

For the candidate route corresponding to each neighboring node, determined is route attribute information including, but not limited to, a route length, an obstacle distance, and the number of times of steering of the vehicle; and the cost information is determined based on the route attribute information.

In practical applications, the corresponding route attribute information can be determined for the candidate route, and the route cost information can be obtained through calculation by using the route attribute information.

The route attribute information may include, but not limited to, the route length, the obstacle distance, and the number of steerings of the vehicle.

Considering the safety of the parking scenario and the efficiency of the parking route, the route cost can be calculated according to the following formula:

$$\text{Route cost} = a*\text{route length} - b*\text{obstacle distance coefficient} + c*\text{Turns\_Num}$$

$$(\text{Cost}=a*\text{Path\_Length}-b*\text{Distan\_Obs}+c*\text{Turns\_Num}),$$

where a, b and c are constants greater than 0.

According to the formula, the longer the route is, the higher the cost is; the greater the distance between the route and the obstacle is, the smaller the cost is; the more the number of times of steering, the greater the cost.

In step 204, a target neighboring node is determined based on the cost information, and the automatic parking is performed in accordance with the target neighboring node.

After the cost information of the candidate route is determined, based on the cost information, the neighboring node corresponding to the target route with the minimum cost among all the candidate routes can be determined as the target neighboring node, the target route from the starting node to an end node via the target neighboring node is the route with the minimum cost, and then the automatic parking can be performed based on the determined target neighboring node.

As the determined target neighboring node is determined based on the cost of the candidate route, the neighboring node corresponding to the candidate route with the minimum route cost can be selected as the target neighboring node, and finally the parking can be performed based on the parking route with the minimum route cost.

For example, as illustrated in FIG. 3a, for the candidate routes **A-B-D-G-K** and **A-B-C-F-K** of the neighboring nodes **G** and **F** of the intermediate node **K,** the corresponding calculation cost information is that the cost of **A-B-D-G-K** is 15 and the cost of **A-B-C-F-K** is 10. Since the cost of the candidate route corresponding to the node **F** is small, **A-B-C-F-K** is the target route, and the node **F** is the target neighboring node. FIG. 3b is a schematic routing diagram after the node **F** is determined to be the target neighboring node, and the automatic parking is performed by taking the node **F** as the target neighboring node.

In an embodiment of the present disclosure, said performing the automatic parking in accordance with the target neighboring node may include the following sub-steps.

A rerouting is performed by adopting the target neighboring node and the intermediate node to obtain a parking route. The automatic parking is performed in accordance with the parking route.

The parking route includes a target route corresponding to the target neighboring node.

After the target neighboring node is determined, the rerouting can be performed by using the target neighboring node and the intermediate node, the parking route can be obtained according to a result of the rerouting, and then the automatic parking can be performed in accordance with the parking route.

The rerouting can be performed for the neighboring nodes of the intermediate node or for the intermediate node and the target node.

In an example, after determining the target neighboring node, the rerouting may be performed for each neighboring node of the intermediate node. Specifically, a plurality of second candidate routes from the starting node to respective neighboring nodes of the intermediate node may be determined; for each of the neighboring nodes, the route cost information of each second candidate route corresponding to the neighboring node is calculated; it is determined whether the rerouting is needed according to the route cost information of the second candidate route, and the rerouting is performed for the neighboring node in need thereof.

The significance of the rerouting process is that the route cost of some nodes can be reduced by rerouting each time when a central node (new node) is generated. From the overall perspectives, not every rerouted node will appear in the final generated route. However, in a process of generating a random tree, every rerouting provides a possibility reducing the cost of the final route as much as possible.

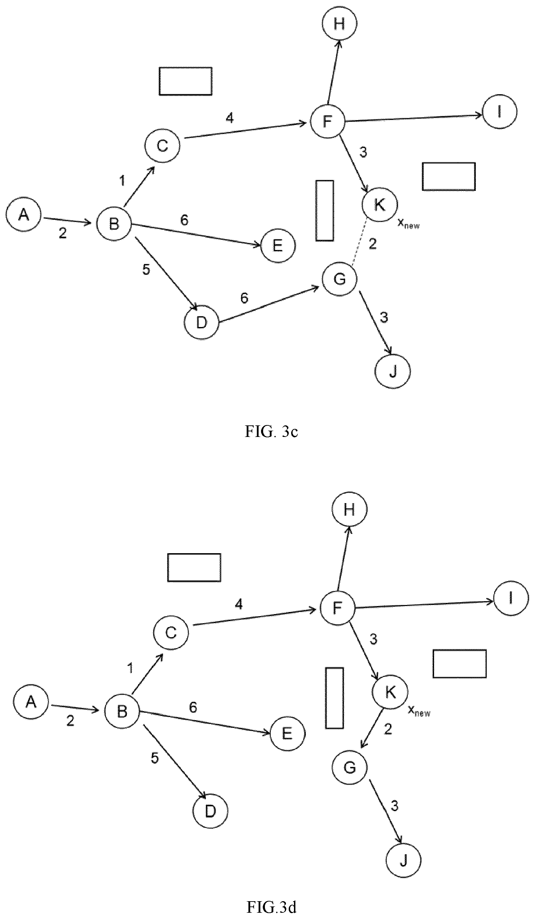

For example, as illustrated in FIG. 3c, after a parent node **F** is reselected for the node **K,** the neighboring nodes **F** and **G** of the node **K** may be subjected to a rerouting. The specific rerouting method is described as below.

For the neighboring node F, there are two second candidate routes from **A** to **F:**

Path 1: **A-B-C-F,** with the calculated route cost of 2+1+4=7; and
Path 2: **A-B-D-G-K-F,** with the calculated route cost of 2+5+6+2+3=17.

Once the target neighboring node is determined, the target route can be determined to be **A-B-C-F-K**. As for the node **F,** the cost of Path 1 is less than that of Path 2, thus **A-B-C-F** is the second candidate route with less route cost, and the routing of this route already exists in the target route. Therefore, the rerouting for the node **F** is unnecessary.

For the neighboring node **G,** there are two routes from A to G:

Path 1: **A-B-D-G,** with the calculated route cost of 2+5+6=13; and
Path 2: **A-B-C-F-K-G,** with the calculated route cost of 2+1+4+3+2=11.

Once the target neighboring node is determined, the target route can be determined to be **A-B-C-F-K.** As for the node **G,** the cost of Path 1 is greater than that of Path 2, thus **A-B-C-F-K-G** is the second candidate route with less route cost, and the current routing does not include the routing of **K-G,** such that the rerouting is necessary for the node **G.** FIG. 3d, illustrates a diagram after the rerouting for the node **G.**

Through the rerouting for the neighboring node, the routing can be continuously optimized in each iteration, and the parking route can be obtained in a more intelligent way.

In an example, after the target neighboring node is determined, it can be further determined whether an obstacle exists between the intermediate node and the target node. When no obstacle exists between the intermediate node and the target node, the intermediate node and the target node may be subjected to a rerouting, and the parking route may be determined based on the target route corresponding to the target neighboring node and the rerouting of the intermediate node and the target node, so as to perform the automatic parking in accordance with the parking route.

When an obstacle exists between the intermediate node and the target node, the step of determining the intermediate node is performed.

In an embodiment of the present disclosure, the method may further include the following steps.

Any two nodes are connected in the parking route by using a preset connection function, where the connection function corresponds to a plurality of connection modes.

After the rerouting for the intermediate node, any two nodes in the parking route may be connected through the preset connection function, where the preset connection function corresponds to the plurality of connection modes.

As an example, the connection modes may include one or more of the following: a Reeds-Sheep curve connection, a straight line-arc connection, an arc-arc connection.

The Reeds-Sheep curve may include at least 3 routes, i.e., straight line-arc-straight line, arc-straight line-arc, arc-arc-arc.

When connecting through the above preset function, the nodes can be connected in various manner, which increases a success rate of connection and thus a success rate of route planning; the planned route also better conforms to people's parking habits; and the number of planned routes is smaller.

In an example, the nearest neighboring node of the intermediate node may be first determined, i.e., a nearest neighboring node that can be connected to the intermediate node with the minimum cost within the preset range, and then it may be determined whether an obstacle exists between this node and the intermediate node. When no obstacle exists between the node and the intermediate node, the cost information of the candidate routes may be calculated respectively based on the group of neighboring nodes obtained by searching, and the target neighboring node may be determined based on the cost information of the candidate route.

When an obstacle exists between the node and the intermediate node, the step of determining the intermediate node is performed.

For example, in FIG. 3a, the intermediate node **K** has the neighboring nodes **G** and **F** within the circle with radius R, the cost value of **G-K** is 2 and the cost value of **F-K** is 3. Based on the costs of these two nodes, the node **G** may be the nearest neighboring node of the intermediate node **K**. In the routing diagram, and the node **G** can be the parent node of the intermediate node **K**.

Further, since no obstacle exists between the node **G** and the intermediate node **K,** the route costs of the candidate routes corresponding to the nodes **G** and **F** (i.e., the routes from the starting node to the node **K** when the nodes **G** and **F** are respectively used as the parent nodes of the node **K**) may be further calculated. After calculating the costs of these two routes, it is obtained that the cost of the corresponding candidate route is less when the node **F** is used as the parent node of intermediate node **K**. Thus, the node **F** can be re-determined as the parent node of the node **K,** that is, the target neighboring node is the node **F**. After the node **F** is determined as the parent node of the node **K,** the corresponding routing is as illustrated in FIG. 3b.

In to the embodiments of the present disclosure, the node distribution information for the to-be-parked area is determined during the automatic parking, the intermediate node is determined based on the node distribution information, and the plurality of neighboring nodes is obtained by searching for the neighboring nodes based on the intermediate node, the cost information of candidate routes corresponding to the plurality of neighboring nodes is determined respectively, the target neighboring node is determined based on the cost information, and the automatic parking is performed in accordance with the target neighboring node. In this way, an automatic parking route can be optimized to be suitable for applying in complex parking scenarios, and thus can have the general applicability. A searching efficiency can be improved by searching for the neighboring nodes. In addition, compared with a method directly using the nearest neighboring node of the intermediate node as a parent node of the intermediate node, the embodiments of the present disclosure select the target neighboring node by adopting the cost information of the route from the starting node to the intermediate node via the neighboring node and thoroughly considers the cost of the overall route, thereby choosing the parking route for parking with the minimum cost.

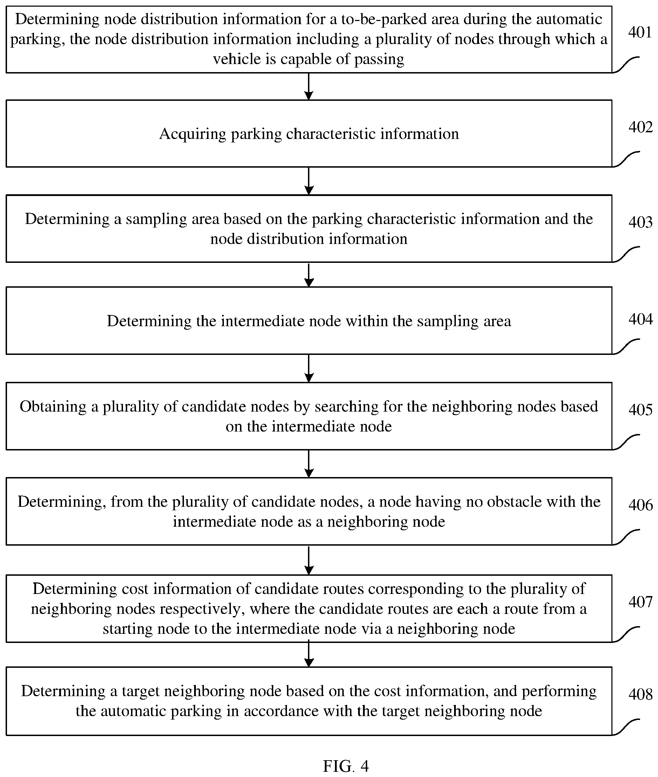

FIG. 4 is a flowchart of steps of another method for automatic parking according to an embodiment of the present disclosure. Referring to FIG. 4, the method may specifically include the following steps.

In step 401, node distribution information for a to-be-parked area is determined during the automatic parking, where the node distribution information includes a plurality of nodes through which a vehicle is capable of passing.

In step 402, parking characteristic information is acquired.

The parking characteristic information includes any one or more of a parking space type, a parking space width, and a relative relation between a starting pose of the vehicle and a target pose of the vehicle.

In step 403, a sampling area is determined based on the parking characteristic information and the node distribution information.

After the parking characteristic information is acquired, the sampling area can be determined based on the parking characteristic information and the node distribution information.

In the above-mentioned manner, the sampling area is determined in comprehensive consideration of the parking characteristic information and the node distribution information, thereby being applicable for different parking environments, and having the general applicability.

For example, it is applicable for a backward parking in a perpendicular parking space, a forward parking in the perpendicular parking space, a parallel parking space, and an oblique parking space.

In an example, offline training can be performed on the sampling area to obtain a preferential sampling area.

Specifically, the sampling area of a preset range may be set (the area of the preset range is larger than the area of a daily sampling area, and a difference value therebetween may be set as a preset value); an RRT star algorithm is executed in a pre-constructed parking scenario library to obtain a planning result; an effective sampling point of the planning result and the parking characteristic information are recorded; and a classification tree containing a mapping relation between the parking characteristic information and the effective sampling point is trained by taking the parking characteristic information as input and the effective sampling node as output.

In the actual parking process, the sampling area can be selected preferentially through the classification tree based on the parking characteristic information and the node distribution information, thereby avoiding a large number of invalid search nodes, improving the searching efficiency, and saving the planning time. In addition, the parking route can be planned in a more reasonable and intelligent manner along with the increase of the size of the parking data set.

For example, different sampling areas can be selected according to different parking space types. The shaded portion in FIG. 1a represents the sampling area of a perpendicular parking space, and the shaded portion in FIG. 2a represents the sampling area of a parallel parking space.

In step 404, the intermediate node is determined within the sampling area.

After the sampling area is determined, in the set sampling area, a parking pose $(x, y, \theta)$ is obtained by sampling, a certain node is randomly sampled in the sampling area, and the node is determined as an intermediate node.

In step 405, a plurality of candidate nodes is obtained by searching for the neighboring nodes based on the intermediate node.

After the intermediate node is determined, by searching for the neighboring nodes within a preset range, the plurality of candidate nodes can be obtained.

For example, in FIG. 3a, the candidate nodes **G, F** and **E** can be obtained by searching within the range of a circle with radius R surrounding the intermediate node **K.**

In step 406, from the plurality of candidate nodes, a node having no obstacle between the node and the intermediate node is determined as a neighboring node.

After the candidate nodes are obtained through searching, due to the existence of obstacles, not every candidate node can be successfully connected to the intermediate node. Therefore, the candidate nodes can be screened to remove the candidate nodes that cannot be connected, and the node having no obstacle between the intermediate node and neighboring nodes can be determined as the neighboring node.

For example, as illustrated in FIG. 3a, among the candidate nodes **G, F,** and **E** of the intermediate node **K,** the node **E** and the node **K** cannot be successfully connected due to the existence of an obstacle. Thus, the node **E** cannot serve as one neighboring node of the intermediate node **K,** and the finally determined neighboring nodes are **G** and **F.**

In step 407, the cost information of candidate routes corresponding to the plurality of neighboring nodes are determined respectively, where the candidate routes are each a route from a starting node to the intermediate node via a neighboring node.

In step 408, the target neighboring node is determined based on the cost information, and the automatic parking is performed in accordance with the target neighboring node.

In the embodiments of the present disclosure, the node distribution information for the to-be-parked area is determined during the automatic parking, the parking characteristic information is acquired, the sampling area is determined based on the parking characteristic information and the node distribution information; and the intermediate node is determined within the sampling area, the plurality of candidate nodes is obtained by searching for the neighboring nodes based on the intermediate node; from the plurality of candidate nodes, the node having no obstacle between the node and the intermediate node is determined as the neighboring node; the cost information of candidate routes corresponding to the plurality of neighboring nodes is determined respectively; the target neighboring node is determined based on the cost information, and the automatic parking is performed in accordance with the target neighboring node. By determining the sampling area based on the parking characteristic information, a large number of invalid search nodes can be avoided, the searching efficiency can be improved, the planning time can be saved. Through sampling in different sampling areas based on different parking characteristics, the method can be applied to various parking scenarios, thereby improving the general applicability. The target neighboring node is determined based on the cost information of the candidate routes, the parking route with low cost can be planned.

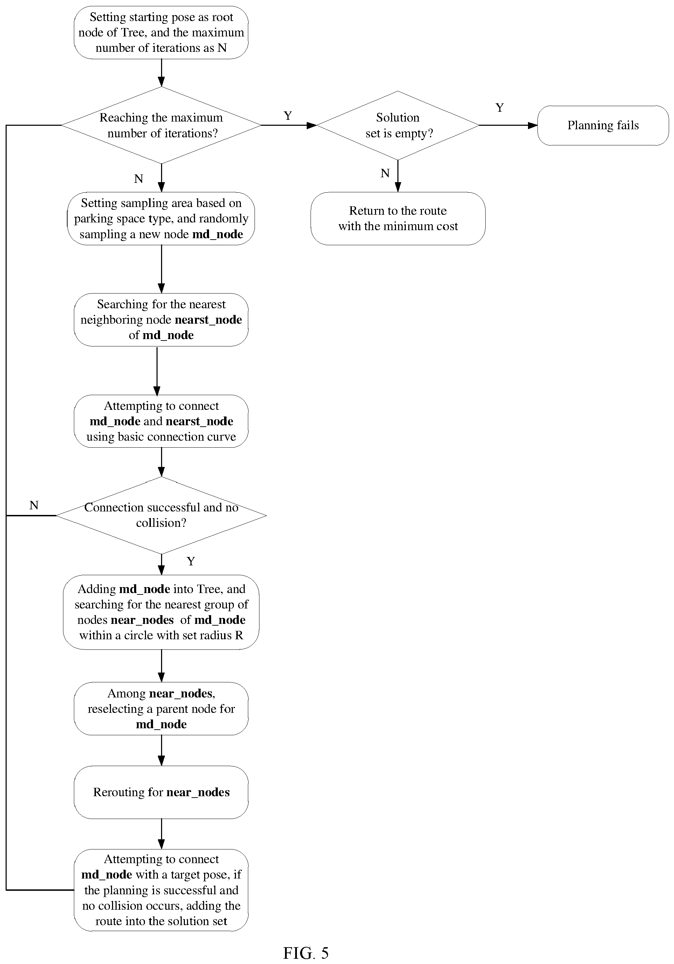

An embodiment of the present disclosure is illustratively explained below with reference to FIG. 5.

1. The starting pose is set as a root node of the Tree, the maximum number of iterations is set to be N, the number of iterations is set to be 0.

Specifically, in the RRT star algorithm, the starting pose is taken as the starting node to plan the parking route, and the maximum number of iterations is set.

2. It is determined whether the number of iterations reaches the maximum number of iterations. If the maximum number of iterations is not reached yet, step 3 is performed; and if the number of iterations is reached, step 11 is performed.

3. The number of iterations =number of iterations +1, a sampling area is set based on the parking space type, and a new node **md_node** (i.e., the intermediate node) is randomly sampled.

Specifically, after the parking characteristic information is acquired, the parking characteristic information may include the parking space type, and then a sampling area may be set based on the parking space type, and the intermediate node may be randomly sampled within the sampling area.

4. The nearest neighboring node **nearst_node** of the node **md_node** (i.e., a neighboring node which is nearest to the node **md_node)** is searched for.

5. The node **md_node** and the node **nearst_node** are attempted to be connected by using a basic connection curve. Specifically, an obstacle may exist between the intermediate node and the nearest neighboring node. Thus, it may be attempted to connect the intermediate node and the nearest neighboring node through a preset function after determining the nearest neighboring node.

6. It is determined whether the connection is successful and no collision occurs, if the connection is successful and no collision occurs, step 7 is performed; otherwise, step 2 is returned to.

When no obstacle exists between the intermediate node and the nearest neighboring node, the connection will be successful, and step 7 is performed; and when an obstacle exists between the intermediate node and the nearest neighboring node, the intermediate node cannot be connected to the nearest neighboring node, and the intermediate node is sampled randomly again.

7. The node **md_node** is added into the Tree, and the nearest group of nodes **near_nodes** (i.e., neighboring nodes) of the node **md_node** is searched for within a circle with a set radius R.

8. Among the nodes **near_nodes,** a parent node (i.e., a target neighboring node) is reselected for the node **md_node.**

9. A rerouting is performed for the nodes **near_nodes.**

10. It is attempted to connect the node **md_node** to a target pose (i.e., a target node), if the planning is successful and no collision occurs, the route is added into the solution set, and step 2 is returned to.

Specifically, after the target neighboring node is determined, it may be further determined whether an obstacle exists between the intermediate node and the target node. When no obstacle exists between the intermediate node and the target node, the intermediate node and the target node may be subjected to a rerouting, a parking route may be determined based on the target route corresponding to the target neighboring node and the rerouting of the intermediate node and the target node, and then the automatic parking may be performed based on the parking route.

11. It is determined whether the solution set is empty. If the solution set is empty, the planning fails; and if the solution set is not empty, the route with the minimum cost is returned to.

Specifically, the solution set is a set of routes planned after multiple iterations.

It should be noted that, for the sake of simple description, the method embodiments of the present disclosure are expressed as a series of action combinations, but those skilled in the art can understand that the embodiments of the present disclosure are not limited to the order of the actions. According to the embodiments of the present disclosure, certain steps may be executed in other orders or simultaneously. In addition, those skilled in the art can also understand that the embodiments described in the specification are preferred embodiments, and the involving actions may not be necessarily required by the embodiments of the present disclosure that come within the scope of the claims.

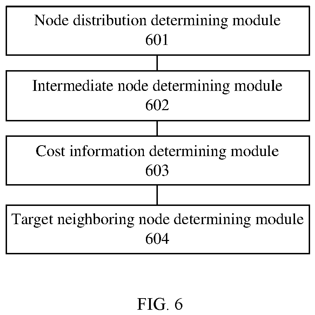

FIG. 6 is a schematic diagram of a vehicle according to an embodiment of the present disclosure. Specifically, referring to FIG. 6, the vehicle may include the following modules: a node distribution determining module 601, an intermediate node determining module 602, a cost information determining module 603, and a target neighboring node determining module 604.

The node distribution determining module 601 is configured to determine node distribution information for a to-be-parked area during the automatic parking. The node distribution information includes a plurality of nodes through which a vehicle is capable of passing.

The intermediate node determining module 602 is configured to determine an intermediate node based on the node distribution information, and obtain a plurality of neighboring node by searching for neighboring nodes based on the intermediate node.

The cost information determining module 603 is configured to determine cost information of candidate routes corresponding to the plurality of neighboring nodes respectively. The candidate routes are each a route from a starting node to the intermediate node via a neighboring node.

The target neighboring node determining module 604 is configured to determine a target neighboring node based on the cost information, and perform the automatic parking in accordance with the target neighboring node.

In an embodiment of the present disclosure, the intermediate node determining module 602 includes: a characteristic information acquisition sub-module configured to acquire parking characteristic information; a sampling area determining sub-module configured to determine a sampling area based on the parking characteristic information and the node distribution information; and an intermediate node determining sub-module configured to determine the intermediate node within the sampling area.

In an embodiment of the present disclosure, the intermediate node determining module 602 further includes: a candidate node determining sub-module configured to obtain a plurality of candidate nodes by searching for the neighboring nodes based on the intermediate node; and a neighboring node determining sub-module configured to determine a node having no obstacle between the node and the intermediate node as a neighboring node from the plurality of candidate nodes.

In an embodiment of the present disclosure, the cost information determining module 603 includes: a route attribute information determining sub-module configured to determine, for one of the candidate routes corresponding to each of the plurality of neighboring nodes, route attribute information including, but not limited to, a route length, an obstacle distance, and the number of times of steering of the vehicle; and a cost information determining sub-module configured to determine the cost information based on the route attribute information.

In an embodiment of the present disclosure, the target neighboring node determining module 604 includes: a parking route generation sub-module is configured to perform a rerouting by adopting the target neighboring node and the intermediate node to obtain a parking route, where the parking route includes a target route corresponding to the target neighboring node; and a parking processing sub-module configured to perform the automatic parking in accordance with the parking route.

In an embodiment of the present disclosure, the vehicle further includes a function connection module configured to connect any two nodes in the parking route by using a preset connection function, where the connection function corresponds to a plurality of connection modes.

In an embodiment of the present disclosure, the parking characteristic information includes any one or more of a parking space type, a parking space width, and a relative relation between a starting pose of the vehicle and a target pose of the vehicle.

In the embodiments of the present disclosure, the node distribution information for the to-be-parked area is determined during the automatic parking, the intermediate node is determined based on the node distribution information, and the plurality of neighboring nodes are obtained by searching for the neighboring nodes based on the intermediate node, the cost information of candidate routes corresponding to the plurality of neighboring nodes is determined respectively, the target neighboring node is determined based on the cost information, and the automatic parking is performed in accordance with the target neighboring node. In this way, the automatic parking route can be optimized to be suitable for applying in complex parking scenarios, and thus can have the general applicability. A searching efficiency can be improved by searching for the neighboring nodes. In addition, compared with a method directly using the nearest neighboring node of the intermediate node as a parent node of the intermediate node, the embodiments of the present disclosure select the target neighboring node by adopting the cost information of the route from the starting node to the intermediate node via the neighboring node and thoroughly considers the cost of the overall route, thereby choosing the parking route for parking with the minimum cost.

An embodiment of the present disclosure further provides a vehicle, which may include a processor, a memory, and a computer program stored on the memory and executable on the processor. The computer program, when executed by the processor, performs the above-described method for automatic parking.

An embodiment of the present disclosure further provides a computer-readable storage medium having a computer program stored thereon. The computer program, when executed by a processor, performs the above-described method for automatic parking.

Since the apparatus embodiments are basically similar to the method embodiments, the description of the apparatus embodiments is relatively simple, and for related description, reference may be made to a corresponding part of the description of the method embodiments.

Respective embodiments in the specification are described in a progressive manner. Each embodiment focuses on differences from other embodiments, and the same or similar parts of various embodiments can be referred to each other.

Those skilled in the art should understand that the embodiments of the present disclosure can be provided as a method, an apparatus, or a computer program product. Therefore, the embodiments of the present disclosure may adopt the form of a complete hardware embodiment, a complete software embodiment, or a software-hardware combined embodiment. In addition, the embodiments of the present disclosure may adopt the form of a computer program product implemented on one or more computer-usable storage media (including, but not limited to, disk storage, Compact Disc Read-Only Memory (CD-ROM), optical storage, etc.) having computer-usable program codes.

The embodiments of the present disclosure are described with reference to flowcharts and/or block diagrams of the method, the terminal device (system), and the computer program product according to the embodiments of the present disclosure. It should be understood that each process and/or block in the flowcharts and/or block diagrams, and a combination of processes and/or blocks in the flowcharts and/or block diagrams can be realized by computer program instructions. These computer program instructions can be provided to a processor of a general-purpose computer, a special-purpose computer, an embedded processor, or other programmable data processing terminal device to generate a machine, such that instructions executed by the processor of the computer or other programmable data processing terminal devices generate an apparatus for implementing functions specified in one or more processes in the flowchart and/or one or more blocks in the block diagram.

These computer program instructions can also be stored in a computer-readable memory that can guide a computer or other programmable data processing terminal devices to operate in a specific manner, such that instructions stored in the computer-readable memory produce an article of manufacture including an instruction device. The instruction device implements functions specified in one or more processes in the flowchart and/or one or more blocks in the block diagram.

These computer program instructions can also be loaded on a computer or other programmable data processing terminal devices to enable a series of operation steps to be executed on the computer or other programmable terminal devices for producing computer-implemented processing, such that instructions executed on the computer or other programmable terminal devices provide steps for implementing functions specified in one or more processes in the flowchart and/or one or more blocks in the block diagram.

Although the preferred embodiments of the embodiments of the present disclosure have been described, those skilled in the art can make additional changes and modifications to these embodiments that fall within the scope of the claims.

Further, it should be noted that relational terms herein, such as "first" and "second", are used only for differentiating one entity or operation from another entity or operation, but they do not necessarily require or imply that there should be any real relationship or sequence between the entities or operations. In addition, the terms "comprise", "include", or any other variations thereof means non-exclusive including. For example, the process, method, article or terminal device including a series of elements not only includes those elements, but also includes other elements that are not explicitly listed or inherent elements of the process, method, article or terminal device. Unless specifically defined, the expression "comprising ..." does not exclude the presence of additional identical elements in the process, method, article or terminal device that includes the said element.

**Claims**

1. A method for automatic parking, the method comprising:

   determining (201) node distribution information for a to-be-parked area during the automatic parking, wherein the node distribution information comprises a plurality of nodes through which a vehicle is capable of passing; and
   determining (202) an intermediate node based on the node distribution information, and obtaining a plurality of neighboring nodes by searching for neighboring nodes based on the intermediate node,
   **characterized in that** the method further comprises:

   determining (203) cost information of candidate routes corresponding to the plurality of neighboring nodes respectively, wherein the candidate routes are each a route from a starting node to the intermediate node via a neighboring node; and
   determining (204) a target neighboring node based on the cost information, and performing the automatic parking in accordance with the target neighboring node,
   wherein said determining the cost information of candidate routes corresponding to the plurality of neighboring nodes respectively comprises:

   determining, for one of the candidate routes corresponding to each of the plurality of neighboring nodes, route attribute information comprising a route length, an obstacle distance, and the number of times of steering of the vehicle; and
   determining the cost information based on the route attribute information.

2. The method according to claim 1, wherein said performing the automatic parking in accordance with the target neighboring node comprises:

performing a rerouting by adopting the target neighboring node and the intermediate node to obtain a parking route, wherein the parking route comprises a target route corresponding to the target neighboring node; and performing the automatic parking in accordance with the parking route.

3. The method according to claim 1 or 2, wherein said determining the intermediate node based on the node distribution information comprises:

acquiring parking characteristic information;
determining a sampling area based on the parking characteristic information and the node distribution information; and
determining the intermediate node within the sampling area.

4. The method according to claim 1, wherein said obtaining a plurality of neighboring nodes by searching for neighboring nodes based on the intermediate node comprises:

obtaining a plurality of candidate nodes by searching for the neighboring nodes based on the intermediate node;
determining, from the plurality of candidate nodes, a node having no obstacle between the node and the intermediate node as a neighboring node.

5. The method according to claim 1 or 2, further comprising:
connecting any two nodes in the parking route by using a preset connection function, wherein the connection function corresponds to a plurality of connection modes.

6. The method according to claim 3, wherein the parking characteristic information comprises any one or more of a parking space type, a parking space width, and a relative relation between a starting pose of the vehicle and a target pose of the vehicle.

7. A vehicle, comprising:

a node distribution determining module (601) configured to determine node distribution information for a to-be-parked area during automatic parking, wherein the node distribution information comprises a plurality of nodes through which a vehicle is capable of passing; and
an intermediate node determining module (602) configured to determine an intermediate node based on the node distribution information, and obtain a plurality of neighboring node by searching for neighboring nodes based on the intermediate node,
**characterized in that** the vehicle further comprises:

a cost information determining module (603) configured to determine cost information of candidate routes corresponding to the plurality of neighboring nodes respectively, wherein the candidate routes are each a route from a starting node to the intermediate node via a neighboring node; and
a target neighboring node determining module (604) configured to determine a target neighboring node based on the cost information, and perform the automatic parking in accordance with the target neighboring node,
wherein the cost information determining module (603) comprises: a route attribute information determining sub-module configured to determine, for one of the candidate routes corresponding to each of the plurality of neighboring nodes, route attribute information including a route length, an obstacle distance, and the number of times of steering of the vehicle; and a cost information determining sub-module configured to determine the cost information based on the route attribute information.

8. The vehicle according to claim 7, wherein the intermediate node determining module (602) comprises: a characteristic information acquisition sub-module configured to acquire parking characteristic information; a sampling area determining sub-module configured to determine a sampling area based on the parking characteristic information and the node distribution information; and an intermediate node determining sub-module configured to determine the intermediate node within the sampling area.

9. The vehicle according to claim 7, wherein the intermediate node determining module (602) further comprises: a candidate node determining sub-module configured to obtain a plurality of candidate nodes by searching for the neighboring nodes based on the intermediate node; and a neighboring node determining sub-module configured to determine a node having no obstacle between the node and the intermediate node as a neighboring node from the plurality of candidate nodes.

10. The vehicle according to claim 7, wherein the target neighboring node determining module (604) comprises: a parking route generation sub-module is configured to perform a rerouting by adopting the target neighboring node and the intermediate node to obtain a parking route, where the parking route includes a target route corresponding to the target neighboring node; and a parking processing sub-module configured to perform the automatic parking in accordance with the parking route.

11. The vehicle according to claim 7, further comprising a function connection module configured to connect any two nodes in the parking route by using a preset connection function, wherein the connection function corresponds to a plurality of connection modes.

12. A vehicle, comprising a processor, a memory, and a computer program stored on the memory and executable on the processor, **characterized in that** the computer program, when executed by the processor, performs steps of the method for automatic parking according to any one of claims 1 to 6.

13. A computer-readable storage medium, having a computer program stored thereon, **characterized in that** the computer program, when executed by a processor, performs steps of the method for automatic parking according to any one of claims 1 to 6.

**Patentansprüche**

1. Verfahren zum automatischen Einparken, wobei das Verfahren Folgendes beinhaltet:

Bestimmen (201) von Knotenverteilungsinformationen für einen Einparkbereich während des automatischen Einparkens, wobei die Knotenverteilungsinformationen eine Mehrzahl von Knoten umfassen, durch die ein Fahrzeug fahren kann; und
Bestimmen (202) eines Zwischenknotens auf der Basis der Knotenverteilungsinformationen und Erhalten einer Mehrzahl von Nachbarknoten durch Suchen nach Nachbarknoten auf der Basis des Zwischenknotens, **dadurch gekennzeichnet, dass** das Verfahren ferner Folgendes beinhaltet:

Bestimmen (203) von Kosteninformationen von Kandidatenrouten, die jeweils der Mehrzahl von Nachbarknoten entsprechen, wobei die Kandidatenrouten jeweils eine Route von einem Startknoten zu dem Zwischenknoten über einen Nachbarknoten sind; und
Bestimmen (204) eines Zielnachbarknotens auf der Basis der Kosteninformationen und Durchführen des automatischen Einparkens gemäß dem Zielnachbarknoten,
wobei das genannte Bestimmen der Kosteninformationen von Kandidatenrouten, die jeweils der Mehrzahl von Nachbarknoten entsprechen, Folgendes beinhaltet:

Bestimmen, für eine der Kandidatenrouten entsprechend jedem aus der Mehrzahl von Nachbarknoten, von Routenattributinformationen, die eine Routenlänge, einen Hindernisabstand und die Anzahl der Lenkvorgänge des Fahrzeugs umfassen; und
Bestimmen der Kosteninformation auf der Basis der Routenattributinformation.

2. Verfahren nach Anspruch 1, wobei das genannte Durchführen des automatischen Einparkens gemäß dem Zielnachbarknoten Folgendes beinhaltet:

Durchführen von Rerouting über den Zielnachbarknoten und den Zwischenknoten, um eine Parkroute zu erhalten, wobei die Parkroute eine Zielroute entsprechend dem Zielnachbarknoten umfasst; und
Durchführen des automatischen Einparkens gemäß der Parkroute.

3. Verfahren nach Anspruch 1 oder 2, wobei das genannte Bestimmen des Zwischenknotens auf der Basis der Knotenverteilungsinformationen Folgendes beinhaltet:

Erfassen von einparkcharakteristischen Informationen;
Bestimmen eines Abtastbereichs auf der Basis der einparkcharakteristischen Informationen und der Knotenverteilungsinformationen; und
Bestimmen des Zwischenknotens innerhalb des Abtastbereichs.

4. Verfahren nach Anspruch 1, wobei das genannte Erhalten einer Mehrzahl von Nachbarknoten durch Suchen nach Nachbarknoten auf der Basis des Zwischenknotens Folgendes beinhaltet:

Erhalten einer Mehrzahl von Kandidatenknoten durch Suchen nach den Nachbarknoten auf der Basis des Zwischenknotens;
Bestimmen, aus der Mehrzahl von Kandidatenknoten, eines Knotens ohne Hindernis zwischen dem Knoten und dem Zwischenknoten als Nachbarknoten.

5. Verfahren nach Anspruch 1 oder 2, das ferner Folgendes beinhaltet:
Verbinden von beliebigen zwei Knoten auf der Parkroute mit Hilfe einer voreingestellten Verbindungsfunktion, wobei die Verbindungsfunktion einer Mehrzahl von Verbindungsmodi entspricht.

6. Verfahren nach Anspruch 3, wobei die einparkcharakteristischen Informationen eines oder mehrere von einem Parkplatztyp, einer Parkplatzbreite und einer relativen Beziehung zwischen einer Startstellung des Fahrzeugs und einer Zielstellung des Fahrzeugs umfassen.

7. Fahrzeug, das Folgendes umfasst:

ein Knotenverteilungsbestimmungsmodul (601), das zum Bestimmen von Knotenverteilungsinformationen für einen Einparkbereich während des automatischen Einparkens konfiguriert ist, wobei die Knotenverteilungsinformationen eine Mehrzahl von Knoten umfassen, durch die ein Fahrzeug fahren kann; und ein
ein Zwischenknotenbestimmungsmodul (602), das zum Bestimmen eines Zwischenknotens auf der Basis der Knotenverteilungsinformationen und zum Erhalten einer Mehrzahl von Nachbarknoten durch Suchen nach Nachbarknoten auf der Basis des Zwischenknotens konfiguriert ist,
**dadurch gekennzeichnet, dass** das Fahrzeug ferner Folgendes umfasst:

ein Kosteninformationsbestimmungsmodul (603), das zum Bestimmen von Kosteninformationen von Kandidatenrouten, die jeweils der Mehrzahl von Nachbarknoten entsprechen, konfiguriert ist, wobei die Kandidatenrouten jeweils eine Route von einem Startknoten zum Zwischenknoten über einen Nachbarknoten sind; und
ein Zielnachbarknotenbestimmungsmodul (604), das zum Bestimmen eines Zielnachbarknotens auf der Basis der Kosteninformationen und zum Durchführen des automatischen Einparkens gemäß mit dem Zielnachbarknoten konfiguriert ist,
wobei das Kosteninformationsbestimmungsmodul (603) Folgendes umfasst: ein Routenattributinformationsbestimmungs-Submodul, das zum Bestimmen, für eine der Kandidatenrouten entsprechend jedem aus der Mehrzahl von Nachbarknoten, von Routenattributinformationen konfiguriert ist, die eine Routenlänge, einen Hindernisabstand und die Anzahl der Lenkvorgänge des Fahrzeugs umfassen; und ein Kosteninformationsbestimmungs-Submodul, das zum Bestimmen der Kosteninformationen auf der Basis der Routenattributinformationen konfiguriert ist.

8. Fahrzeug nach Anspruch 7, wobei das Zwischenknotenbestimmungsmodul (602) Folgendes umfasst: ein Submodul zur Erfassung charakteristischer Informationen, das zum Erfassen von einparkcharakteristischen Informationen konfiguriert ist; ein Abtastbereichsbestimmungs-Submodul, das zum Bestimmen eines Abtastbereichs auf der Basis der einparkcharakteristischen Informationen und der Knotenverteilungsinformationen konfiguriert ist; und ein Zwischenknotenbestimmungs-Submodul, das zum Bestimmen des Zwischenknotens innerhalb des Abtastbereichs konfiguriert ist.

9. Fahrzeug nach Anspruch 7, wobei das Zwischenknotenbestimmungsmodul (602) ferner Folgendes umfasst: ein Kandidatenknotenbestimmungs-Submodul, das zum Erhalten einer Mehrzahl von Kandidatenknoten durch Suchen nach den Nachbarknoten auf der Basis des Zwischenknotens konfiguriert ist; und ein Nachbarknotenbestimmungs-Submodul, das zum Bestimmen eines Knotens ohne Hindernis zwischen dem Knoten und dem Zwischenknoten als Nachbarknoten aus der Mehrzahl von Kandidatenknoten konfiguriert ist.

10. Fahrzeug nach Anspruch 7, wobei das Zielnachbarknotenbestimmungsmodul (604) Folgendes umfasst: ein Parkroutenerzeugungs-Submodul, das zum Durchführen von Rerouting über den Zielbachbarknoten und den Zwischenknoten konfiguriert ist, um eine Parkroute zu erhalten, wobei die Parkroute eine Zielroute enthält, die dem Zielnachbarknoten entspricht; und ein Einparkverarbeitungs-Submodul, das zum Durchführen des automatischen Einparkens gemäß der Parkroute konfiguriert ist.

11. Fahrzeug nach Anspruch 7, das ferner ein Funktionsverbindungsmodul umfasst, das zum Verbinden von beliebigen zwei Knoten in der Parkroute mit Hilfe einer voreingestellten Verbindungsfunktion konfiguriert ist, wobei die Verbindungsfunktion einer Mehrzahl von Verbindungsmodi entspricht.

12. Fahrzeug mit einem Prozessor, einem Speicher und einem Computerprogramm, das in dem Speicher gespeichert und auf dem Prozessor ausführbar ist, **dadurch gekennzeichnet, dass** das Computerprogramm bei Ausführung durch den Prozessor Schritte des Verfahrens zum automatischen Einparken nach einem der Ansprüche 1 bis 6 durchführt.

13. Computerlesbares Speichermedium mit einem darauf gespeicherten Computerprogramm, **dadurch gekennzeichnet, dass** das Computerprogramm bei Ausführung durch einen Prozessor Schritte des Verfahrens zum automatischen Einparken nach einem der Ansprüche 1 bis 6 durchführt.

**Revendications**

1. Procédé de stationnement automatique, le procédé comprenant :

une détermination (201) d'informations de distribution de noeuds pour un secteur destiné à un stationnement pendant le stationnement automatique, dans lequel les informations de distribution de noeuds comprennent une pluralité de noeuds par lesquels un véhicule est capable de passer ; et
une détermination (202) d'un noeud intermédiaire sur la base des informations de distribution de noeuds, et une obtention d'une pluralité de noeuds voisins en recherchant des noeuds voisins sur la base du noeud intermédiaire,
**caractérisé en ce que** le procédé comprend en outre :

une détermination (203) d'informations de coût d'itinéraires candidats correspondant à la pluralité de noeuds voisins respectivement, dans lequel les itinéraires candidats sont chacun un itinéraire à partir d'un noeud de départ vers le noeud intermédiaire via un noeud voisin ; et
une détermination (204) d'un noeud voisin cible sur la base des informations de coût, et une réalisation du stationnement automatique selon le noeud voisin cible,
dans lequel ladite détermination des informations de coût d'itinéraires candidats correspondant à la pluralité de noeuds voisins comprend respectivement :

une détermination, pour un des itinéraires candidats correspondant à chacun de la pluralité de noeuds voisins, d'informations d'attributs d'itinéraire comprenant une longueur d'itinéraire, une distance d'obstacle, et le nombre de manoeuvres du véhicule ; et
une détermination des informations de coût sur la base des informations d'attributs d'itinéraire.

2. Procédé selon la revendication 1, dans lequel ladite réalisation du stationnement automatique selon le noeud voisin cible comprend :

une réalisation d'un changement d'itinéraire en adoptant le noeud voisin cible et le noeud intermédiaire pour obtenir un itinéraire de stationnement, dans lequel l'itinéraire de stationnement comprend un itinéraire cible correspondant au noeud voisin cible ; et
une réalisation du stationnement automatique selon l'itinéraire de stationnement.

3. Procédé selon la revendication 1 ou 2, dans lequel ladite détermination du noeud intermédiaire sur la base des informations de distribution de noeuds comprend :

une acquisition d'informations de caractéristiques de stationnement ;
une détermination d'un secteur-échantillon sur la base des informations de caractéristiques de stationnement et des informations de distribution de noeuds ; et
une détermination du noeud intermédiaire au sein du secteur-échantillon.

**4.** Procédé selon la revendication 1, dans lequel ladite obtention d'une pluralité de noeuds voisins en recherchant des noeuds voisins sur la base du noeud intermédiaire comprend :

une obtention d'une pluralité de noeuds candidats en recherchant les noeuds voisins sur la base du noeud intermédiaire ;
une détermination, à partir de la pluralité de noeuds candidats, d'un noeud ne présentant aucun obstacle entre le noeud et le noeud intermédiaire à titre de noeud voisin.

**5.** Procédé selon la revendication 1 ou 2, comprenant en outre :
une connexion de deux noeuds quelconques dans l'itinéraire de stationnement en utilisant une fonction de connexion prédéfinie, dans lequel la fonction de connexion correspond à une pluralité de modes de connexion.

**6.** Procédé selon la revendication 3, dans lequel les informations de caractéristiques de stationnement comprennent un ou plusieurs éléments quelconques parmi un type d'espace de stationnement, une largeur d'espace de stationnement, et une relation relative entre une pose de départ du véhicule et une pose cible du véhicule.

**7.** Véhicule, comprenant :

un module de détermination de distribution de noeuds (601) configuré pour déterminer des informations de distribution de noeuds pour un secteur destiné à un stationnement pendant le stationnement automatique, dans lequel les informations de distribution de noeuds comprennent une pluralité de noeuds par lesquels un véhicule est capable de passer ; et
un module de détermination de noeud intermédiaire (602) configuré pour déterminer un noeud intermédiaire sur la base des informations de distribution de noeuds, et une obtention d'une pluralité de noeuds voisins en recherchant des noeuds voisins sur la base du noeud intermédiaire,
**caractérisé en ce que** le véhicule comprend en outre :

un module de détermination d'informations de coût (603) configuré pour déterminer des informations de coût d'itinéraires candidats correspondant à la pluralité de noeuds voisins respectivement, dans lequel les itinéraires candidats sont chacun un itinéraire à partir d'un noeud de départ vers le noeud intermédiaire via un noeud voisin ; et
un module de détermination de noeud voisin cible (604) configuré pour déterminer un noeud voisin cible sur la base des informations de coût, et réaliser le stationnement automatique selon le noeud voisin cible, dans lequel le module de détermination d'informations de coût (603) comprend : un sous-module de détermination d'informations d'attributs d'itinéraire configuré pour déterminer, pour un des itinéraires candidats correspondant à chacun de la pluralité de noeuds voisins, des informations d'attributs d'itinéraire comprenant une longueur d'itinéraire, une distance d'obstacle, et le nombre de manoeuvres du véhicule ;
et un sous-module de détermination d'informations de coût configuré pour déterminer les informations de coût sur la base des informations d'attributs d'itinéraire.

**8.** Véhicule selon la revendication 7, dans lequel le module de détermination de noeud intermédiaire (602) comprend : un sous-module d'acquisition d'informations de caractéristiques configuré pour acquérir des informations de caractéristiques de stationnement ; un sous-module de détermination de secteur-échantillon configuré pour déterminer un secteur-échantillon sur la base des informations de caractéristiques de stationnement et des informations de distribution de noeuds ; et un sous-module de détermination de noeud intermédiaire configuré pour déterminer le noeud intermédiaire au sein du secteur-échantillon.

**9.** Véhicule selon la revendication 7, dans lequel le module de détermination de noeud intermédiaire (602) comprend en outre : un sous-module de détermination de noeuds candidats configuré pour obtenir une pluralité de noeuds candidats en recherchant les noeuds voisins sur la base du noeud intermédiaire ; et un sous-module de détermination de noeud voisin configuré pour déterminer un noeud ne présentant aucun obstacle entre le noeud et le noeud intermédiaire à titre de noeud voisin à partir de la pluralité de noeuds candidats.

**10.** Véhicule selon la revendication 7, dans lequel le module de détermination de noeud voisin cible (604) comprend : un sous-module de génération d'itinéraire de stationnement est configuré pour réaliser un changement d'itinéraire en adoptant le noeud voisin cible et le noeud intermédiaire pour obtenir un itinéraire de stationnement, où l'itinéraire de stationnement inclut un itinéraire cible correspondant au noeud voisin cible ; et un sous-module de traitement de stationnement configuré pour réaliser le stationnement automatique selon l'itinéraire de stationnement.

**11.** Véhicule selon la revendication 7, comprenant en outre un module de connexion de fonction configuré pour connecter deux noeuds quelconques dans l'itinéraire de stationnement en utilisant une fonction de connexion prédéfinie, dans lequel la fonction de connexion correspond à une pluralité de modes de connexion.

**12.** Véhicule, comprenant un processeur, une mémoire, et un programme informatique stocké sur la mémoire et exécutable sur le processeur, **caractérisé en ce que** le programme informatique, lorsqu'exécuté par le processeur, réalise des étapes du procédé pour un stationnement automatique selon l'une quelconque des revendications 1 à 6.

**13.** Support de stockage lisible par ordinateur, présentant un programme informatique stocké dessus, **caractérisé en ce que** le programme informatique, lorsqu'exécuté par un processeur, réalise des étapes du procédé pour un stationnement automatique selon l'une quelconque des revendications 1 à 6.

FIG. 1a

FIG. 1b

| Determining node distribution information for a to-be-parked area during the automatic parking, the node distribution information including a plurality of nodes through which a vehicle is capable of passing | 201 |
|---|---|

| Determining an intermediate node based on the node distribution information, and obtaining a plurality of neighboring nodes by searching for neighboring nodes based on the intermediate node | 202 |
|---|---|

| Determining cost information of candidate routes corresponding to the plurality of neighboring nodes respectively, the candidate routes being each a route from a starting node to the intermediate node via a neighboring node | 203 |
|---|---|

| Determining a target neighboring node based on the cost information, and performing the automatic parking in accordance with the target neighboring node | 204 |
|---|---|

FIG. 2

FIG. 3a

FIG. 3b

FIG. 3c

FIG.3d

| Determining node distribution information for a to-be-parked area during the automatic parking, the node distribution information including a plurality of nodes through which a vehicle is capable of passing | 401 |

| Acquiring parking characteristic information | 402 |

| Determining a sampling area based on the parking characteristic information and the node distribution information | 403 |

| Determining the intermediate node within the sampling area | 404 |

| Obtaining a plurality of candidate nodes by searching for the neighboring nodes based on the intermediate node | 405 |

| Determining, from the plurality of candidate nodes, a node having no obstacle with the intermediate node as a neighboring node | 406 |

| Determining cost information of candidate routes corresponding to the plurality of neighboring nodes respectively, where the candidate routes are each a route from a starting node to the intermediate node via a neighboring node | 407 |

| Determining a target neighboring node based on the cost information, and performing the automatic parking in accordance with the target neighboring node | 408 |

FIG. 4

Setting starting pose as root node of Tree, and the maximum number of iterations as N

Reaching the maximum number of iterations? — Y → Solution set is empty? — Y → Planning fails

N

N

Return to the route with the minimum cost

Setting sampling area based on parking space type, and randomly sampling a new node **md_node**

Searching for the nearest neighboring node **nearst_node** of **md_node**

Attempting to connect **md_node** and **nearst_node** using basic connection curve

Connection successful and no collision? — N

Y

Adding **md_node** into Tree, and searching for the nearest group of nodes **near_nodes** of **md_node** within a circle with set radius R

Among **near_nodes**, reselecting a parent node for **md_node**

Rerouting for **near_nodes**

Attempting to connect **md_node** with a target pose, if the planning is successful and no collision occurs, adding the route into the solution set

FIG. 5

Node distribution determining module
601

Intermediate node determining module
602

Cost information determining module
603

Target neighboring node determining module
604

FIG. 6

**EP 3 971 047 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3568334 A1